# EUROPEAN PATENT SPECIFICATION

(11) **EP 3 501 901 B1**
(45) Date of publication and mention of the grant of the patent: **12.08.2020**
(21) Application number: 17208692.8
(22) Date of filing: 19.12.2017
(51) Int. Cl.: B60R 7/08

(54) **STORAGE HOUSING, ESPECIALLY FOR GLASSES, AND ROOF MODULE COMPRISING SUCH A STORAGE HOUSING**
AUFBEWAHRUNGSGEHÄUSE, INSBESONDERE FÜR BRILLEN, UND DACHMODUL MIT EINEM SOLCHEN AUFBEWAHRUNGSGEHÄUSE
BOÎTIER DE STOCKAGE, EN PARTICULIER POUR DES LUNETTES, ET MODULE DE TOIT COMPRENANT UN TEL BOÎTIER DE STOCKAGE

(43) Date of publication of application: 26.06.2019
(73) Proprietor: DAV, 94046 Créteil Cedex (FR)
(72) Inventor: LICKO, Lubos, 94046 Créteil CEDEX (SK)
(74) Representative: Delplanque, Arnaud

(56) References cited:
- WO-A1-94/18031
- DE-A1-102013 020 313
- JP-A- 2004 175 256
- JP-A- 2008 247 134
- JP-A- 2011 152 813
- KR-B1- 100 825 402

## Description

### Field of invention

The present invention relates to a storage housing, especially for glasses, and a roof module comprising such a storage housing. The invention is preferentially intended for a use in a passengers compartment of an automotive vehicle like a car.

### Description of the Related Art

Glass boxes integrated in roof modules of a passengers compartment of a car are known. They comprise a cover articulated in rotation on a glass box body. While such kinematic is rather simple to implement it may lead to an insufficient opening passage.

Indeed, the angular displacement of the cover is limited to take into account the available space which is reduced in such area of the vehicle. Moreover, for the same reason, the rotation axis of the cover is located beneath a closing part of the cover to which it is linked by flanges.

As a result, even when displaced to its largest opening angle, the opening passage between the cover and the glass body remains relatively small which may lead to difficulties to introduce the glasses in the glass box.

A first solution would be to place the rotation axis of the cover along a side of its closing part. Nevertheless, the cover would then protrude out the available space when displaced.

Japanese patent document JP 2008-247134 A discloses a storage housing comprising a body and a cover closing said body, said housing further comprising a cam, a cam path and a lever, said lever being in relation with a degree of liberty in rotation with both said body and said cover, said housing being configured, when opening said cover, so that said cam moves along the cam path in response of a lever actuation to obtain a cover displacement while the cover remains partially inside the housing body.

### Summary of the invention

The invention aims to solve at least partially the above mentioned issues by providing a storage housing according to claim 1.

By using a lever which can both lift the cover and have it pivot through the help of a cam and a cam path associated therewith, the cover is displaced in a limited space while offering a large opening passage. While pivoting, the cover has no fixed rotation axis located on an outside face of the housing body and can hence be kept partially inside it which limits the space needed for the cover displacement outside the housing body. It can also be lifted which contributes to enlarge the opening passage.

The invention can also comprise any of the following features taken individually or in any technically possible combination:
- said first lever is in relation with a degree of liberty in rotation with said body along a fixed rotational axis,
- said fixed rotational axis is located within the housing body,
- said first cam path is located on the body,
- said first cam path is defined by a first guiding groove,
- said first groove is curved,
- said first groove follows a curve with a decreasing curvature between a closing and an open position of the cover,
- said first cam is located on the cover,
- said first cam is defined by a first moving pin guided in said first groove,
- said cover comprises a closing part and a first flange,
- said first flange comprises a first distal bearing in which said first lever is articulated,
- said first distal bearing is located on a distal side of the first flange opposite the cover closing part,
- said body comprises a first proximal bearing in which said first lever is articulated,
- said first proximal bearing is located below said cover closing part,
- said first guiding pin is located on the distal side of the first flange,
- said first lever, said first pin and said first groove are configured so that said first distal bearing gets farther from the first groove towards a concave part of said groove when approaching the open position,
- said housing comprises a first spring actuating said cover,
- said first spring is located between said body and said first flange,
- said housing comprises a second spring,
- said second spring is symmetrical to said first spring,
- in an alternative, said housing comprises a single spring actuating said cover, said spring being linked to said shaft,
- said housing comprises a brake smoothing said displacement,
- said brake comprises teeth wheels, a first teeth wheel thereof being actuated by said shaft and a second teeth wheel thereof being fixed to the body and engaging said first teeth wheel.

The invention also relates to a roof module comprising such a storage housing.

### Short description of the drawings

The invention will be better understood on the light of the following description which is only indicative and which is not intended to limit said invention, accompanied with the following figures:
- Figure 1a to 1c are cross-sectional views showing a first embodiment of a storage housing according to the invention respectively in a closed, partially open and fully position,
- Figure 2 is a cross-sectional view of a cover of the storage housing of figures 1a to 1c,
- Figure 3 is a perspective view partially showing in perspective the storage housing of figures 1 a to 1 c without a housing body thereof,
- Figure 4 is a side view partially showing of the storage housing of figures 1 a to 1c,
- Figure 5 is a cross-sectional view of another embodiment of a storage housing according to the invention,
- Figure 6 is a perspective view showing the bottom part of the storage housing of Figure 5.

### Detailed Description

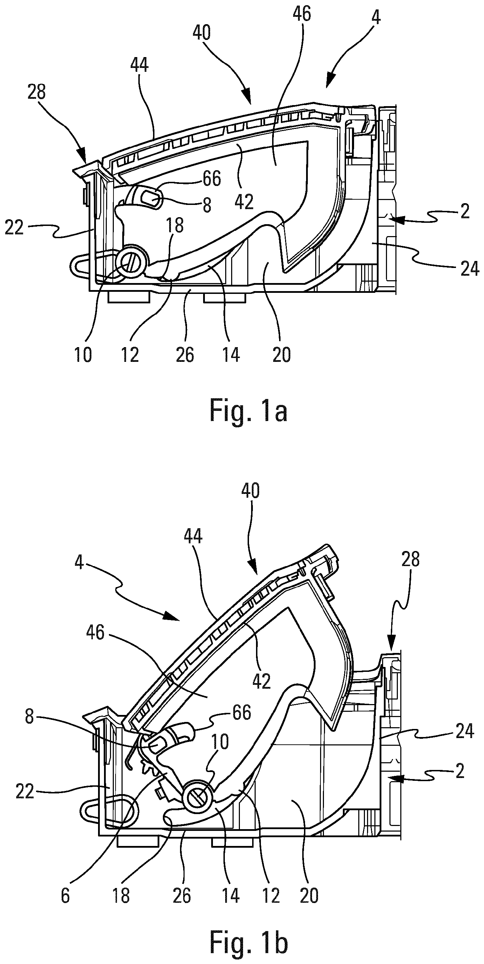

As illustrated in the figures 1a to 1c, the invention relates to a storage housing. It is especially intended to contend glasses. In other words, the storage housing according to the invention is especially intended to be a glass box.

Said housing comprises a body 2. Said body comprises for instance lateral walls 20, only one of them being visible on the figures, a front wall 22 and a back wall 24 all linked by a bottom side 26 of said body 2. Said body 2 may also comprise an aesthetic frame 28 dissimulating free edges of said lateral walls 20, front wall 22 and back wall 24.

Said housing further comprises a cover 4 closing said body 2, more especially closing an aperture defined by said aesthetic frame 28 and/or the free edges of said lateral walls 20, front wall 22 and back wall 24. Said cover 4 comprises a closing part 40. Said closing part 40 may comprise a supporting armature 42 and aesthetic panel 44 fixed on said supporting armature 42. Said cover 4 further comprises a first flange 46 extending from the closing part 40 in parallel to one of said lateral wall 20 called herein after first lateral wall.

The aesthetic frame 28 and/or the aesthetic panel 44 may be made of a material nobler than the rest of the housing so as to improve the finish perceived by a user.

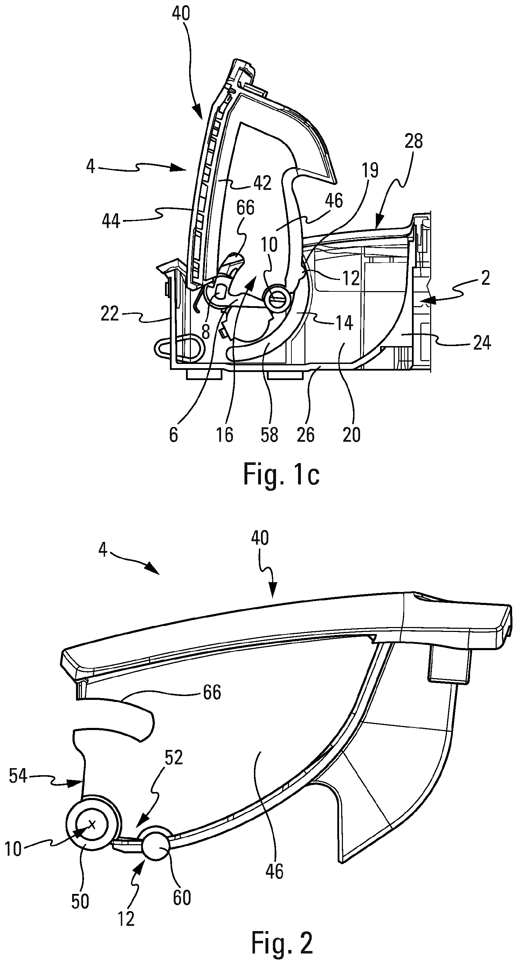

Said housing further comprises a first lever 6 better visible on figures 1b and 1c. It is here located between the first lateral wall 20 of the housing body 2 and the first flange 46 of said cover 4.

Said first lever 6 is in relation with a degree of liberty in rotation with said body 2 along a fixed rotational axis 8. Said fixed rotational axis 8 is located within the housing body 2. More precisely it is here located between the lateral walls which is to say below the body aperture. Said first lever 6 is further in relation with a degree of liberty in rotation with said cover 4 along a mobile rotational axis 10. In other words, the mobile rotational axis 10 pivots circularly around the fixed rotational axis 8.

However, said housing further comprises a first cam 12 and a first cam path 14 and it is configured so that said first cam 12 moves along the first cam path 14 in response of an actuation of the first lever 6 to obtain a displacement of the cover 4 combining a pivoting movement and a lifting movement while the cover 4 remains partially inside the housing body 2.

In other words, the cover 4 and the housing body 2 are not in relation with one another according to a fixed rotational axis. On the contrary the cover displacement is determined by the movement of the mobile rotational axis 10 together with the movement of the first cam 12 in the first cam path 14. Thanks to such cooperation, it is possible to obtain both a pivoting movement and a lifting movement of the cover 4 while having a part 16 thereof remaining inside the housing body 2. It hence enables to open widely the cover 4 and to limit the space needed for the cover opening trajectory. Accordingly, glasses or other items can be more easily introduced inside the housing and the latter can more easily be located in areas where the available place is reduced.

In figure 1a, the cover 4 is in a closing position in which the housing body 2 is closed by said cover 4. The first lever 6 has an orientation which is approximatively vertical or slightly angularly shifted from the vertical, on the left on the figure. The first cam 12 is located on a first extremity 18 of the first cam path 14, the lower left extremity on the figures.

In figure 1b, the cover 4 has moved counter clockwise and the housing body 2 is partially open. The first lever 6 has moved counter clockwise too and has an orientation which is angularly clearly shifted from the vertical, on the right on the figure. The first cam 12 is located along the first cam path 14 on an intermediate position thereon.

In figure 1c, the cover 4 is in an opening position. It has further moved counter clockwise. It is in an end of course configuration where it is totally open. The first lever 6 has further moved counter clockwise too and has an orientation which is approximatively horizontal or slightly below under the horizontal. The first cam 6 is located on a second extremity 19 of the first cam path 14, the upper right extremity on the figure.

As illustrated on figure 2, said first flange 46 advantageously, comprises a first distal bearing 50 in which said lever 6 is articulated relatively to said cover 4 around said mobile rotational axis 10. Said first distal bearing 50 is located on a distal side 52 of the first flange 46 opposite the cover closing part 40. It is here at a corner of said distal side 52 and a front side 54 of said first flange 46.

Said first lateral wall 20 comprises a first proximal bearing not shown in which said first lever 6 is articulated around said fixed rotational axis 8. Said first proximal bearing is located in the vicinity of said cover closing part, just below the free edge of said first lateral wall 20.

Advantageously, said first cam path 14 is located on the housing body 2. Said first cam path 14 is for instance defined by a first guiding groove 58, especially located on said first lateral wall 20. As can be more easily seen on figure 1c, said first groove 58 is curved. It for instance follows a curve with a decreasing curvature between said closing and said open positions of the cover 4. It especially follows a portion of an ellipse. The first proximal bearing 50 and hence the fixed rotational axis 8 are located in concave part of said groove 58. Here, said first groove 58 is defined as a through hole.

Said first cam 12 is located on the cover 4. It is here defined by a first moving pin 60 guided in said first groove 58. For that purpose, said first pin 60 extends transversally in direction of said first lateral wall 20.

As can be best seen on figure 2, said first moving pin 60 is located on the distal side 52 of the first flange 46 away from the first distal bearing 50 in a direction opposite said front side 54. Said first moving pin 60 has here a circular section. It follows tangentially opposite sides of said groove 58.

Going back to figures 1a to 1c, it can be seen that said first lever 6, said first pin 60 and said first groove 58 are configured so that said first distal bearing 50 and hence said mobile rotational axis 10 gets farther from the first groove 58 towards said concave part of said groove 58 when approaching the open position. Such movement is obtained thanks to the relative position of the first distal bearing 50 and the first pin 60 together with the curvature of the first groove 58. In such embodiment, it hence determines the cover displacement described above.

The configuration of the housing body 2 and the cover 4 is preferentially symmetrical according to a median plan, parallel to the plan of the figure 1 a to 1c.

Accordingly, said cover 4 further comprises a second flange symmetrical to the first flange 46 and extending from the closing part 40 in parallel to the other of said lateral wall called herein after second lateral wall.

Said housing further comprises a second lever symmetrical to the first lever 6. It is located between the second lateral wall of the housing body 2 and the second flange of said cover 4.

Said second flange comprises a second distal bearing symmetrical to the first distal bearing 50, said second lever being articulated relatively to said cover 4 around said mobile rotational axis 10 in said second distal bearing. Said second lateral wall comprises a second proximal bearing symmetrical to said first proximal bearing, said second lever being articulated around said fixed rotational axis 8 in said second proximal bearing.

Said housing further comprises a second cam and a second cam path which are respectively symmetrical to the first cam 12 and the first cam path 14. Thanks to such symmetrical configuration, a more balanced cover displacement can be obtained.

Said second flange, second lever, second cam and second cam paths are not illustrated on the figures.

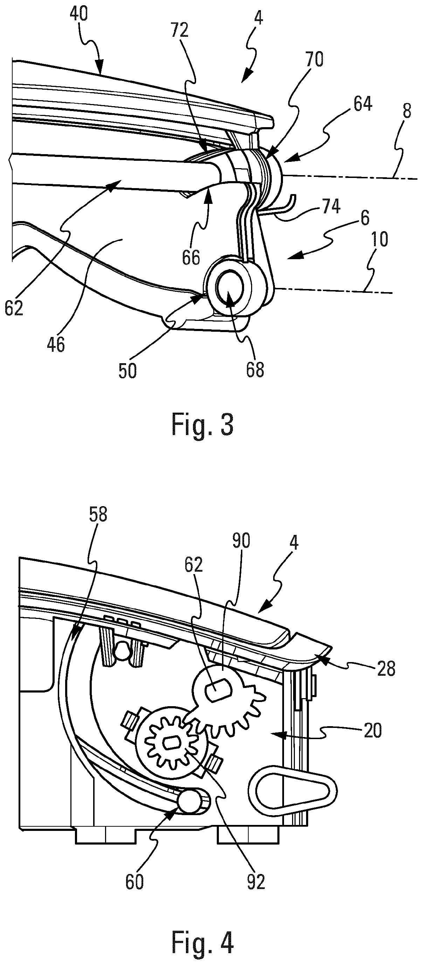

As can be seen on figure 3, the housing further comprises a shaft 62. Said first lever 6 and second levers are linked by said shaft 62 to synchronize their movement. It can be for instance a metal shaft. Said shaft 62 is located along said fixed rotational axis 8.

Said first and/or second levers respectively comprise a proximal end located in the corresponding proximal bearing. Said proximal end comprises a proximal pin 64 projecting transversally along said fixed rotational axis 8, said proximal pin 64 having a circular shape to pivot inside the corresponding proximal bearing around said fixed rotational axis 8.

Said shaft 62 is linked to the first and second levers in the area of the proximal longitudinal ends thereof. More precisely said shaft 62 is here linked in a centered manner to said proximal pins 64. Moreover said first and/or second flange comprise a slit 66 to let a passage for said shaft 62. Said slit 66 is curved according to the relative displacement of the cover 4 and the shaft 62.

Going back to figure 1a to 1c, said shaft 62 is located in a longitudinal end of said slit 66 in the closed position. It is located close to an open longitudinal end of said slit 66 in the intermediate position. It is located outside said slit 66 in the opening position.

Said first and/or second levers further respectively comprise distal ends located in the corresponding distal bearing 50. Said distal end comprises a distal pin 68 projecting transversally along said mobile rotational axis 10, said distal pin 68 having a circular shape to pivot inside the corresponding distal bearing around said mobile rotational axis 10.

As illustrated on figure 3, 5 and 6, said housing comprises a spring 70, 70' actuating said cover 4.

According to the embodiment illustrated on figure 3, said housing comprise a first spring 70 located between said body, especially said first side wall, and said first flange 46. More precisely it located in the vicinity of said first proximal bearing. Even more precisely, it is surrounding the proximal pin 64 corresponding to said first proximal bearing. One ending branch 72 of the first spring 70 is linked to the lever 6 and the other opposite ending branch 74 of the first spring 70 is linked to the housing body 2, here its front wall.

To keep the symmetrical configuration of the housing mentioned above, it may comprise a second spring symmetrical to the first spring 70.

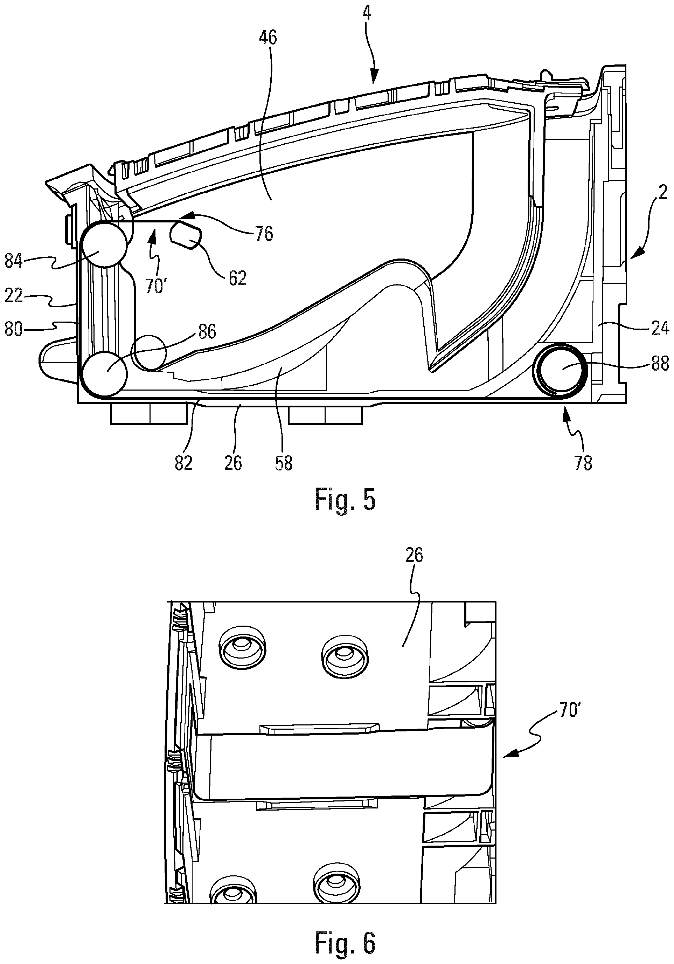

According to the embodiment illustrated on figure 5 and 6, said housing comprises a single spring 70' actuating said cover 4. Said spring 70' is here linked to a central part on the housing. A first end 76 of said spring 70' is fixed to said shaft 62. Another opposite end 78 is fixed to said body 2. Said spring 70' comprise here a first 80 and a second 82 intermediate branch joining said first end 76 and said opposite end 78 thereof. Said first branch 80 is extending in parallel of said front wall 22 and said second branch 78 is extending in parallel of said bottom wall 26.

Said first end 76 of the spring 70' is sensibly parallel to said second intermediate branch 82. It gives its spring effect to said spring 70'. Said first end 76 of the spring 70' is joined to said first intermediate branch 80 around a first holding pin 84. Said first intermediate branch 80 is joined to said second intermediate branch 82 around a second holding pin 86. Said opposite end of the spring 70' is located around a third holding pin 88.

As illustrated on figure 4, said housing advantageously comprises a brake smoothing said cover displacement. Said brake comprises teeth wheels 90, 92. More precisely, it comprises here a first teeth wheel 90 actuated by said shaft 62 and a second teeth wheel 92 which is fixed to the body 2 on its first lateral wall 20 and engaging said first teeth wheel 90. Said second teeth wheel 92 is in a damping feature like silicon brake.

Said housing may further comprise any kind of cover switch as a push-type switch, not illustrated, thanks to which the user locks and unlocks the cover 4. According to such kind of switch, when the cover is locked on its closed position (figure 1a), a first pull actuation of the switch unlocks the cover and triggers its displacement toward the opening position (figure 1c). When the user wants to close the cover, he or she guides it toward the closed position in which the switch relocks the cover.

The invention also relates to a roof module 2 which is not illustrated. Said roof control module comprises a storage housing as described above. Said storage housing may hence comprise any of the technical features previously described.

The roof control module may be located on the ceiling of a car, between the two front seats and aligned with the central mirror. It may further comprise headlamps, sensors and/or control buttons corresponding to various functions to be actuated by the driver and/or the front passenger.

The invention has been described above with the aid of embodiments shown in the figures, without limitation of the general inventive concept. Many other modifications and variations are suggested by those skilled in the art, after reflection on the various embodiments illustrated in this application. These embodiments are given by way of example and are not intended to limit the scope of the invention, which is determined exclusively by the claims below.

## Claims

1. Storage housing, especially for glasses, said housing comprising a body (2) and a cover (4) closing said body (2), said housing further comprising a first cam (12), a first cam path (14) and a first lever (6), said first lever (6) being in relation with a degree of liberty in rotation with both said body (2) and said cover (4), said housing being configured so that Z when opening said cover (4), said first cam (12) moves along the first cam path (14) in response of a first lever actuation to obtain a cover displacement combining a pivoting movement and a lifting movement while the cover (4) remains partially inside the housing body (2), wherein said housing comprises a second cam, a second cam path and second lever which are respectively symmetrical to said first cam (12), said first cam path (14) and said first lever (6) wherein said first and second levers are linked by a shaft (62) to synchronize their movement.

2. Storage housing according to claim 1 wherein said first cam path (14) is located on the body (2).

3. Storage housing according to any of claim 1 or 2 wherein said first cam path (14) is defined by a first guiding groove (58).

4. Storage housing according to claim 3 wherein said first groove (58) follows a curve with a decreasing curvature between a closing and an open position of the cover (4).

5. Storage housing according to any of claims 3 or 4 wherein said first cam (12) is defined by a first moving pin (60) guided in said first groove (58).

6. Storage housing according to any of the preceding claims wherein said first cam (12) is located on the cover (4).

7. Storage housing according to any of the preceding claims wherein said cover (4) comprises a closing part (40) and a first flange (46).

8. Storage housing according to claim 7 wherein said first flange (46) comprises a first distal bearing (50) in which said first lever (6) is articulated.

9. Storage housing according to claim 8 wherein said first distal bearing (50) is located on a distal side (52) of the first flange (46) opposite the cover closing part (40).

10. Storage housing according to any of the preceding claims wherein said body (2) comprises a first proximal bearing in which said first lever (6) is articulated.

11. Storage housing according to any of the preceding claims wherein said housing comprises a brake smoothing said displacement, said brake comprising teeth wheels (90, 92), a first teeth wheel (90) thereof being actuated by said shaft (62) and a second teeth wheel (92) thereof being fixed to the body (2) and engaging said first teeth wheel (90).

12. Storage housing according to any of the preceding claims wherein said housing comprises a first spring (70, 70') actuating said cover (4).

13. Roof module comprising a storage housing according to any of the preceding claims.

## Patentansprüche

1. Aufbewahrungsgehäuse, insbesondere für Brillen, wobei das Gehäuse einen Körper (2) und einen Deckel (4), der den Körper (2) verschließt, umfasst, wobei das Gehäuse ferner einen ersten Nocken (12), einen ersten Nockenpfad (14) und einen ersten Hebel (6) umfasst, wobei sich der erste Hebel (6) mit einem Drehungsfreiheitsgrad bezüglich des Körpers (2) als auch des Deckels (4) befindet, wobei das Gehäuse so konfiguriert ist, dass, beim Öffnen des Deckels (4), sich der erste Nocken (12) als Reaktion auf eine Betätigung des ersten Hebels entlang dem ersten Nockenpfad (14) bewegt, um eine Verlagerung des Deckels zu erzielen, wobei eine Schwenkbewegung und eine Hebelbewegung kombiniert werden, während der Deckel (4) zum Teil in dem Gehäusekörper (2) bleibt,
wobei das Gehäuse einen zweiten Nocken, einen zweiten Nockenpfad und einen zweiten Hebel, die jeweils symmetrisch zu dem ersten Nocken (12), dem ersten Nockenpfad (14) und dem ersten Hebel (6) sind, umfasst, wobei der erste und der zweite Hebel durch eine Welle (62) zur Synchronisation ihrer Bewegung verbunden sind.

2. Aufbewahrungsgehäuse nach Anspruch 1, wobei sich der erste Nockenpfad (14) auf dem Körper (2) befindet.

3. Aufbewahrungsgehäuse nach Anspruch 1 oder 2, wobei der erste Nockenpfad (14) durch eine erste Führungsnut (58) definiert wird.

4. Aufbewahrungsgehäuse nach Anspruch 3, wobei die erste Nut (58) einer Kurve mit abnehmender Krümmung zwischen einer geschlossenen und einer geöffneten Stellung des Deckels (4) folgt.

5. Aufbewahrungsgehäuse nach Anspruch 3 oder 4, wobei der erste Nocken (12) durch einen ersten Bewegungsstift (60), der in der ersten Nut (58) geführt wird, definiert wird.

6. Aufbewahrungsgehäuse nach einem der vorhergehenden Ansprüche, wobei sich der erste Nocken (12) an dem Deckel (4) befindet.

7. Aufbewahrungsgehäuse nach einem der vorhergehenden Ansprüche, wobei der Deckel (4) einen Verschlussteil (40) und einen ersten Flansch (46) umfasst.

8. Aufbewahrungsgehäuse nach Anspruch 7, wobei der erste Flansch (46) ein erstes distales Lager (50) umfasst, in dem der erste Hebel (6) angelenkt ist.

9. Aufbewahrungsgehäuse nach Anspruch 8, wobei sich das erste distale Lager (50) auf einer distalen Seite (52) des ersten Flanschs (46) gegenüber dem Deckelverschlussteil (40) befindet.

10. Aufbewahrungsgehäuse nach einem der vorhergehenden Ansprüche, wobei der Körper (2) ein erstes proximales Lager umfasst, in dem der erste Hebel (6) angelenkt ist.

11. Aufbewahrungsgehäuse nach einem der vorhergehenden Ansprüche, wobei das Gehäuse eine Bremse umfasst, die die Verlagerung glättet, wobei die Bremse Zahnräder (90, 92) umfasst, wobei ein erstes Zahnrad (90) davon von der Welle (62) betätigt wird und ein zweites Zahnrad (92) davon an dem Körper (2) fixiert ist und mit dem ersten Zahnrad (90) in Eingriff steht.

12. Aufbewahrungsgehäuse nach einem der vorhergehenden Ansprüche, wobei das Gehäuse eine erste Feder (70, 70') umfasst, die den Deckel (4) betätigt.

13. Dachmodul, das ein Aufbewahrungsgehäuse nach einem der vorhergehenden Ansprüche umfasst.

## Revendications

1. Boîtier de rangement, en particulier pour des lunettes, ledit boîtier comprenant un corps (2) et un couvercle (4) fermant ledit corps (2), ledit boîtier comprenant en outre une première came (12), une première piste de came (14) et un premier levier (6), ledit premier levier (6) étant en relation, avec un degré de liberté en rotation, à la fois avec ledit corps (2) et ledit couvercle (4), ledit boîtier étant configuré de telle sorte que, lors de l'ouverture du couvercle (4), ladite première came (12) se déplace le long de la première piste de came (14) en réponse à un actionnement du premier levier pour obtenir un déplacement du couvercle combinant un mouvement de pivotement et un mouvement de levage, tandis que le couvercle (4) reste en partie à l'intérieur du corps de boîtier (2),
ledit boîtier comprenant une deuxième came, une deuxième piste de came et un deuxième levier qui sont respectivement symétriques par rapport à ladite première came (12), ladite première piste de came (14) et ledit premier levier (6), lesdits premier et deuxième leviers étant reliés par un arbre (62) pour synchroniser leur mouvement.

2. Boîtier de rangement selon la revendication 1, dans lequel ladite première piste de came (14) est située sur le corps (2).

3. Boîtier de rangement selon l'une quelconque des revendications 1 et 2, dans lequel ladite première piste de came (14) est définie par une première gorge de guidage (58).

4. Boîtier de rangement selon la revendication 3, dans lequel ladite première gorge (58) suit une courbe de courbure décroissante entre une position de fermeture et une position ouverte du couvercle (4) .

5. Boîtier de rangement selon l'une quelconque des revendications 3 et 4, dans lequel ladite première came (12) est définie par une première goupille mobile (60) guidée dans ladite première gorge (58) .

6. Boîtier de rangement selon l'une quelconque des revendications précédentes, dans lequel ladite première came (12) est située sur le couvercle (4) .

7. Boîtier de rangement selon l'une quelconque des revendications précédentes, dans lequel ledit couvercle (4) comprend une partie de fermeture (40) et une première bride (46).

8. Boîtier de rangement selon la revendication 7, dans lequel ladite première bride (46) comprend un premier palier distal (50) dans lequel est articulé ledit premier levier (6).

9. Boîtier de rangement selon la revendication 8, dans lequel ledit premier palier distal (50) est situé sur un côté distal (52) de la première bride (46) opposé à la partie de fermeture de couvercle (40) .

10. Boîtier de rangement selon l'une quelconque des revendications précédentes, dans lequel ledit corps (2) comprend un premier palier proximal dans lequel est articulé ledit premier levier (6).

11. Boîtier de rangement selon l'une quelconque des revendications précédentes, dans lequel ledit boîtier comprend un frein modérant ledit déplacement, ledit frein comprenant des roues dentées (90, 92), une première roue dentée (90) de celui-ci étant actionnée par ledit arbre (62) et une deuxième roue dentée (92) de celui-ci étant fixée au corps (2) et venant en prise avec ladite première roue dentée (90).

12. Boîtier de rangement selon l'une quelconque des revendications précédentes, dans lequel ledit boîtier comprend un premier ressort (70, 70') actionnant ledit couvercle (4).

13. Module de toit comprenant un boîtier de rangement selon l'une quelconque des revendications précédentes.
